# EUROPÄISCHE PATENTSCHRIFT

(11) **EP 4 071 346 B1**
(45) Veröffentlichungstag und Bekanntmachung des Hinweises auf die Patenterteilung: **18.12.2024**
(21) Anmeldenummer: 22166390.9
(22) Anmeldetag: 01.04.2022
(51) Int. Cl.: F03B 13/00

(54) **ENERGIEÜBERTRAGUNGSSYSTEM UND INSTALLATION MIT EINEM SOLCHEN ENERGIEÜBERTRAGUNGSSYSTEM**
ENERGY TRANSFER SYSTEM AND INSTALLATION WITH SUCH AN ENERGY TRANSFER SYSTEM
SYSTÈME DE TRANSMISSION D'ÉNERGIE ET INSTALLATION DOTÉE D'UN TEL SYSTÈME DE TRANSMISSION D'ÉNERGIE

(30) Priorität: 09.04.2021 CH 3642021
(43) Veröffentlichungstag der Anmeldung: 12.10.2022
(73) Patentinhaber: Viega Technology GmbH & Co. KG, 57439 Attendorn (DE)
(72) Erfinder: OBRIST, Roland, 7412 Scharans (CH); KNUPFER, Daniel, 7205 Zizers (CH); CATHOMAS, Patric, 7017 Flims (CH); KNUPFER, Thomas, 7302 Landquart (CH); TRIET, Philipp, 7310 Bad Ragaz (CH)
(74) Vertreter: Cohausz & Florack

(56) Entgegenhaltungen:
- WO-A1-01/18405
- CN-A- 104 727 382
- DE-B3- 102019 103 596
- DE-C1- 4 403 180
- US-A1- 2012 032 560
- US-A1- 2014 042 751

## Beschreibung

### TECHNISCHES GEBIET

Die vorliegende Erfindung betrifft ein Energieübertragungssystem für eine Wasserleitung einer Sanitärinstallation.

### STAND DER TECHNIK

Aus dem Stand der Technik sind Energiegewinnungssysteme für Trinkwassernetze bekannt, mit welchen beispielsweise mit einer Turbine bei fliessendem Wasser elektrische Energie gewonnen werden kann, welche dann Geräten zur Verfügung gestellt werden kann, welche Strom für deren Betrieb benötigen. Dementsprechend brauchen diese Geräte keinen Stromnetzanschluss und demnach auch keine Verkabelung. Solche Systeme haben jedoch den Nachteil, dass nur bei fliessendem Wasser Energie gewonnen werden kann. Zudem wird kein Strom erzeugt, wenn die Fliessgeschwindigkeit zu gering ist. Im Weiteren wird immer Strom erzeugt, wenn Wasser fliesst, unabhängig davon, ob dieser auch wirklich benötigt wird oder nicht. Ein Energieübertragungssystem für eine Fluidleitung wird im Dokument US 2012/032560 A1 offenbart.

### BESCHREIBUNG DER ERFINDUNG

Eine Aufgabe der vorliegenden Erfindung besteht darin, ein Energieübertragungssystem für eine Wasserleitung einer Sanitärinstallation, bereitzustellen, welches unabhängig vom Verbrauch von Wasser einem Verbraucher elektrische Energie zuführen kann.

Diese Aufgabe wird durch ein Energieübertragungssystem mit den Merkmalen des Anspruchs 1 gelöst. Weitere Ausführungsformen des Energieübertragungssystems, sowie einer Installation mit einem solchen Energieübertragungssystem sind durch die Merkmale von weiteren Ansprüchen definiert.

Das erfindungsgemässe Energieübertragungssystem für eine Wasserleitung einer Sanitärinstallation umfasst eine Generatoreinheit mit einem Netzteil, welche an einer ersten Stelle der Wasserleitung angeordnet werden kann, und mindestens eine Verbrauchereinheit mit mindestens einem Verbraucher, welche an einer zur ersten Stelle beabstandeten zweiten Stelle der Wasserleitung angeordnet werden kann. Die Generatoreinheit umfasst einen mit dem Netzteil verbundenen Druckstosserzeuger, mit welchem Druckstösse erzeugt werden können, welche in das in der Wasserleitung befindliche Wasser eingeleitet werden können. Die Verbrauchereinheit umfasst einen mit dem mindestens einen Verbraucher verbundenen Druckstosswandler, mit welchem die in das Wasser eingeleiteten Druckstösse in elektrische Energie umgewandelt werden können, welche dem mindestens einen Verbraucher zugeführt werden kann. Dies hat den Vorteil, dass der mindestens eine Verbraucher keine kabelgebundene Stromversorgung benötigt und auch dann Strom erhält, wenn kein Wasser in der Leitung fliesst bzw. strömt. Als Verbraucher ist eine Einheit zu verstehen, welche im Betrieb elektrischen Strom verbraucht.

In einer Ausführungsform umfasst der mindestens eine Verbraucher mindestens einen Sensor. Alternativ oder zusätzlich kann er mindestens einen Aktuator umfassen. Beispielsweise umfasst ein Sensor einen Temperatursensor, einen Durchflusssensor, einen Positionssensor, beispielsweise der Ventilstellung oder einen Näherungssensor.

Beispielsweise umfasst der Aktuator ein Ventil. Ein Verbraucher kann auch mehrere Ventile umfassen, so zum Beispiel bei einer Mischeinheit, bei welcher ein Warmwasser- und ein Kaltwasserventil vorgesehen sind. Eine Mischeinheit kann zusätzlich Temperatursensoren umfassen, mit welchen die Mischtemperatur, die Kaltwasser-Temperatur und die Warmwasser-Temperatur messbar sind.

Weitere Beispiele von Verbrauchern umfassen akustische Signalgeber, wie beispielsweise ein Lautsprecher oder ein Piepser, optische Anzeigen, wie beispielsweise Lichter oder Displays, Beleuchtungselemente, Bedienelemente, wie beispielsweise Eingabeeinheiten, weitere Sensoren, wie beispielsweise Feuchtigkeitssensoren und Funk-Range-Extender.

Gemäss der Erfindung umfasst die Verbrauchereinheit einen Speicher, mit welchem die vom Druckstosswandler bereitgestellte elektrische Energie gespeichert werden kann. Beispielsweise ist ein solcher Speicher eine Batterie oder ein Kondensator.

In einer Ausführungsform umfasst die Generatoreinheit eine erste Übermittlungseinheit, welche mit dem Netzteil verbunden ist, und die Verbrauchereinheit umfasst eine zweite Übermittlungseinheit, welche mit dem Druckstosswandler verbunden ist. Die erste Übermittlungseinheit und die zweite Übermittlungseinheit oder mehrere zweite Übermittlungseinheiten untereinander können drahtlos untereinander Informationen austauschen. Beispielsweise können Informationen von einer zweiten Übermittlungseinheit zur nächsten weitergeleitet werden, bis diese bei der ersten Übermittlungseinheit angelangen. Dies erlaubt eine geringere Sendeleistung der einzelnen Übermittlungseinheiten. Bekannte Beispiele solcher Übermittlungssysteme im Radiofrequenzbereich sind Bluetooth, WLAN, ZigBee, NFC, Wibree oder WiMAX. Alternativ können höherfrequente Druckstössen zur Informationsübertragung verwendet werden. In diesem Fall ist der Druckstosswandler der Verbrauchereinheit derart ausgestaltet, dass er auch als Druckstosserzeuger verwendet werden kann. Dementsprechend umfassen die Generatoreinheit und jede Verbrauchereinheit Drucksensoren, mit welchen diese höherfrequenten Druckstösse erfassbar sind.

In einer Ausführungsform umfasst die Generatoreinheit einen Speicher, mit welchem die vom Netzteil bereitgestellte elektrische Energie gespeichert werden kann. Somit kann das System auch bei einem Stromausfall noch eine gewisse Zeit einwandfrei funktionieren.

In einer Ausführungsform umfasst der Druckstosserzeuger beispielswiese einen Lautsprecher oder ein Piezoelement oder einen motorisierten Kolben, mit welchen aus elektrischer Energie Druckstösse erzeugbar sind. Der Druckstosswandler umfasst beispielsweise ein Mikrophon oder ein Piezoelement. Lautsprecher und Mikrophone zeichnen sich dadurch aus, dass Sie eine Membran, eine Spule und einen Magneten umfassen, wobei entweder der Magnet oder die Spule mit der Membran verbunden sind und eine Relativbewegung zwischen dem Magneten und der Spule induktiv einen elektrischen Strom erzeugt und wobei ein sich wechselnder Strom in der Spule ein sich wechselndes Magnetfeld erzeugt, was eine Bewegung des Magneten bewirkt. Die Membran kann aus Kunststoff oder Metall gefertigt sein.

Alternativ kann ein Sandwich aus Metall- und Polymerschichten verwendet werden, welches bei seiner Biegung elektrische Energie erzeugt.

In einer Ausführungsform umfasst der Druckstosserzeuger einen Druckluftanschluss und mindestens ein Ventil, mit welchen aus Druckluft Druckstösse erzeugbar sind. Der Druckluftanschluss kann mit einem Drucktank verbunden sein, welcher mit einer Druckluftpumpe verbunden ist, oder er kann direkt mit einer Druckluftpumpe verbunden sein.

In einer Ausführungsform ist der Druckstosserzeuger konfiguriert, um Druckstösse mit Amplituden im Bereich von 0.1 bis 1.0 Bar und Frequenzen im Bereich von 0.5 bis 5.0 Hertz zu erzeugen. Der in der Leitung vorherrschende Druck kann erhöht oder abgesenkt werden. Die Druckänderung kann linear oder sinusförmig erfolgen. Der Druckstosswandler ist konfiguriert, um diese Druckstösse in elektrische Energie umzuwandeln. Dies hat zur Folge, dass der in der

Wasserleitung vorherrschende Druck von üblicherweise 3 bis 4 Bar während einer Dauer von 0.1 bis 1.0 Sekunden um 0.1 bis 1.0 Bar erhöht oder absenkt.

In einer Ausführungsform umfasst die Verbrauchereinheit eine Steuerung, welche mit der zweiten Übermittlungseinheit eine entsprechende Information aussenden kann, wenn die im Speicher gespeicherte elektrische Energie einen vorbestimmten Wert unterschreitet. Die Generatoreinheit umfasst eine Steuerung, welche aufgrund einer von der ersten Übermittlungseinheit empfangenen Information eine Aktivierung des Druckstosserzeugers bewirken kann.

Die erwähnten Ausführungsformen des Energieübertragungssystems lassen sich in beliebiger Kombination einsetzen, sofern sie sich nicht widersprechen.

Eine erfindungsgemässe Sanitärinstallation umfasst mindestens eine Wasserleitung und ein Energieübertragungssystem gemäss einer der vorangehenden Ausführungsformen.

In einer Ausführungsform ist die Generatoreinheit derart ausgestaltet und an der Wasserleitung angeordnet, dass der Druckstosserzeuger Druckstösse direkt auf die Wasserleitung übertragen kann. Alternativ können die Druckstösse direkt auf das sich in der Wasserleitung befindliche Wasser übertragen werden. Alternativ können die Druckstösse auf ein sich zwischen dem Druckstosserzeuger und dem Wasser befindliches weiteres Fluid übertragen werden. Beispielsweise ist das weitere Fluid Gas bzw. Luft. Zwischen dem Wasser und dem weiteren

Fluid kann eine bewegliche Wand oder eine Membran vorgesehen sein.

In einer Ausführungsform ist die Verbrauchereinheit derart ausgestaltet und an der Wasserleitung angeordnet, dass der Druckstosswandler Druckstösse direkt von der Wasserleitung umwandeln kann. Alternativ können die Druckstösse direkt aus dem sich in der Wasserleitung (3) befindlichen Wasser umgewandelt werden. Alternativ können die Druckstösse aus dem sich zwischen dem Druckstosserzeuger und dem Wasser befindlichen weiteren Fluid, bzw. Gas umgewandelt werden. Zwischen dem Wasser und dem weiteren Fluid kann eine bewegliche Wand oder eine Membran vorgesehen sein.

Sowohl die Generatoreinheit wie auch die Verbrauchereinheit können eine Kammer umfassen, welche mit dem Leitungsinnern verbunden ist. Die Kammer kann mit dem sich in der Wasserleitung befindlichen Wasser und/oder mit einem weiteren Fluid gefüllt sein.

Die erwähnten Ausführungsformen der Sanitärinstallation lassen sich in beliebiger Kombination einsetzen, sofern sie sich nicht widersprechen.

### KURZE BESCHREIBUNG DER FIGUREN

Ausführungsbeispiele der vorliegenden Erfindung werden nachstehend anhand von Figuren noch näher erläutert. Diese dienen lediglich zur Erläuterung und sind nicht einschränkend auszulegen. Es zeigen
Fig. 1 eine perspektivische Ansicht einer Sanitärinstallation mit einem erfindungsgemässen Energieübertragungssystem;
Fig. 2 eine schematische Schnittansicht einer ersten Ausführungsform des erfindungsgemässen Energieübertragungssystems;
Fig. 3 eine schematische Schnittansicht einer zweiten Ausführungsform des erfindungsgemässen Energieübertragungssystems; und
Fig. 4 eine schematische Schnittansicht einer dritten Ausführungsform des erfindungsgemässen Energieübertragungssystems.

### DETAILLIERTE BESCHREIBUNG DER ERFINDUNG

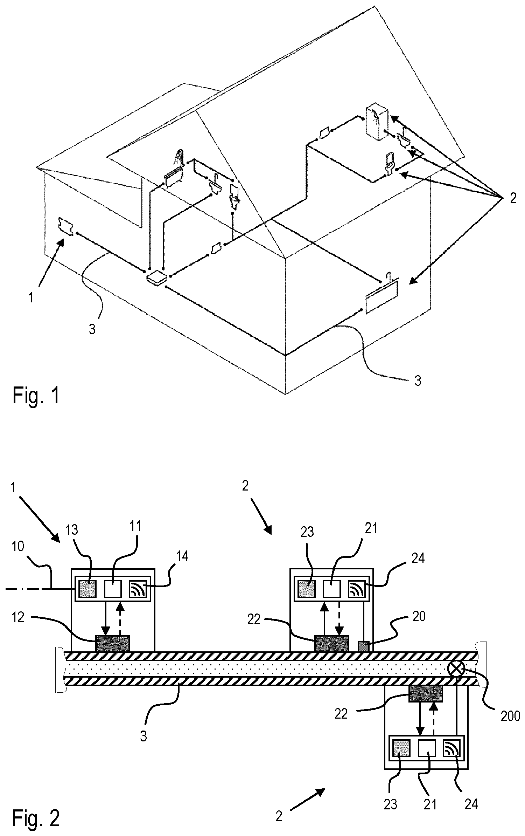

Die Figur 1 zeigt eine perspektivische Ansicht einer Sanitärinstallation mit einem erfindungsgemässen Energieübertragungssystem mit einer Generatoreinheit 1 und mehreren Verbrauchereinheiten 2, welche im Gebäude verteilten an einer der mit der Generatoreinheit 1 verbundenen Wasserleitungen 3 angeordnet sind.

Die Figur 2 zeigt eine schematische Schnittansicht einer ersten Ausführungsform des erfindungsgemässen

Energieübertragungssystems mit einer Generatoreinheit 1 und einer ersten und einer zweiten Verbrauchereinheit 2, welche beabstandet zueinander und beabstandet zur Generatoreinheit 1 an einer gemeinsamen Wasserleitung 3 angeordnet sind. Die Generatoreinheit 1 umfasst ein Netzteil 10, eine Steuerung 11, einen Druckstosserzeuger 12, einen Speicher 13 und eine erste Übermittlungseinheit 14, welche funktionell miteinander verbunden sind. In der dargestellten Ausführungsform kann der Druckstosserzeuger 12 Druckstösse direkt auf die Aussenseite der Wasserleitung 3 übertragen. Die Verbrauchereinheiten 2 umfassen eine Steuerung 21, einen Druckstosswandler 22, einen Speicher 23 und eine zweite Übermittlungseinheit 24. Die in dieser

Figur dargestellte obere Verbrauchereinheit 2 umfasst zusätzlich einen Sensor 20 und die untere Verbrauchereinheit 2 einen Aktuator 200. Die dargestellten Druckstosswandler 22 können Druckstösse direkt von der Aussenseite der Wasserleitung 3 übernehmen und in elektrische Energie umwandeln.

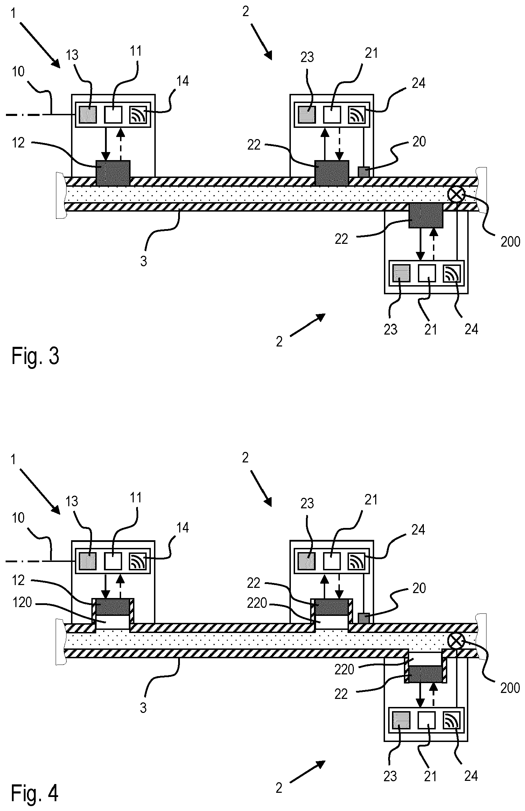

Die Figur 3 zeigt eine schematische Schnittansicht einer zweiten Ausführungsform des erfindungsgemässen Energieübertragungssystems. Die Generatoreinheit 1 und die Verbrauchereinheiten 2 entsprechen im Wesentlichen diejenigen der Figur 2. Die Generatoreinheit 1 unterscheidet sich darin, dass der Druckstosserzeuger 12 im direkten Kontakt mit dem sich in der Wasserleitung 3 befindlichen Wasser steht. Hierfür ist eine entsprechende Ausnehmung in der Wasserleitung 3 vorgesehen.

Die Verbrauchereinheit 2 unterscheidet sich darin, dass der Druckstosswandler 22 im direkten Kontakt mit dem sich in der Wasserleitung 3 befindlichen Wasser ist. Hierfür ist ebenfalls eine entsprechende Ausnehmung in der Wasserleitung 3 vorgesehen. Der Druckstosserzeuger, wie auch der Druckstosswandler können eine bewegliche Membran oder einen beweglichen Kolbenboden umfassen, welcher im direkten Kontakt mit dem Wasser steht. Die Figur 4 zeigt eine schematische Schnittansicht einer dritten Ausführungsform des erfindungsgemässen Energieübertragungssystems. Bei dieser Ausführungsform ist zwischen dem Druckstosserzeuger 12 und dem Wasser eine Kammer mit einem weiteren Fluid (Gas/Luft) 120 vorgesehen und die Druckstösse können vom Druckstosserzeuger 12 direkt auf das Gas 120 übertragen werden, welches diese weiter auf das Wasser überträgt.

Zwischen dem Druckstosswandler 22 und dem Wasser ist eine Kammer mit einem Gas 220 vorgesehen und die Druckstösse können vom Wasser auf das Gas 220 übertragen werden und von diesem direkt auf den Druckstosswandler 22. Der Druckstosserzeuger, wie auch der Druckstosswandler können eine bewegliche Membran oder eine bewegliche Wand, wie beispielsweise einen beweglichen Kolbenboden umfassen, welcher im direkten Kontakt mit dem Gas steht. Zwischen dem Gas und dem Wasser können eine bewegliche Membran oder eine bewegliche Kammerwand vorgesehen sein.

**BEZUGSZEICHENLISTE**

| | | | |
|---|---|---|---|
| 1 | Generatoreinheit | 200 | Aktuator |
| 10 | Netzteil | 21 | Steuerung |
| 11 | Steuerung | 22 | Druckstosswandler |
| 12 | Druckstosserzeuger | 220 | Gas |
| 120 | Gas | 23 | Speicher |
| 13 | Speicher | 24 | zweite Übermittlungseinheit |
| 14 | erste Übermittlungseinheit | | |
| | | 3 | Wasserleitung |
| 2 | Verbrauchereinheit | | |
| 20 | Sensor | | |

## Patentansprüche

1. Energieübertragungssystem für eine Wasserleitung (3) einer Sanitärinstallation umfassend eine Generatoreinheit (1) mit einem Netzteil (10), welche an einer ersten Stelle der Wasserleitung (3) angeordnet werden kann, und mindestens eine Verbrauchereinheit (2) mit mindestens einem Verbraucher (20;200), welche an einer zur ersten Stelle beabstandeten zweiten Stelle der Wasserleitung (3) angeordnet werden kann, wobei
die Generatoreinheit (1) einen mit dem Netzteil (10) verbundenen Druckstosserzeuger (12) umfasst, mit welchem Druckstösse erzeugt werden können, welche in das in der Wasserleitung (3) befindliche Wasser eingeleitet werden können, und wobei
die Verbrauchereinheit (2) einen mit dem mindestens einen Verbraucher (20;200) verbundenen Druckstosswandler (22) umfasst, mit welchem die in das Wasser eingeleiteten Druckstösse in elektrische Energie umgewandelt werden können, welche dem mindestens einen Verbraucher (20;200) zugeführt werden kann, und wobei
die Verbrauchereinheit (2) einen Speicher (23) umfasst, mit welchem die vom Druckstosswandler (22) bereitgestellte elektrische Energie gespeichert werden kann.

2. Energieübertragungssystem gemäss Anspruch 1, wobei der mindestens eine Verbraucher mindestens einen Sensor (20) und/oder mindestens einen Aktuator (200) umfasst.

3. Energieübertragungssystem gemäss Anspruch 1 oder 2, wobei die Generatoreinheit (1) eine erste Übermittlungseinheit (14) umfasst, welche mit dem Netzteil (10) verbunden ist, und wobei die Verbrauchereinheit (2) eine zweite Übermittlungseinheit (24) umfasst, welche mit dem Druckstosswandler (22) verbunden ist, wobei die erste Übermittlungseinheit (14) und die zweite Übermittlungseinheit (24) oder mehrere zweite Übermittlungseinheiten (24) untereinander drahtlos untereinander Informationen austauschen können.

4. Energieübertragungssystem gemäss einem der vorangehenden Ansprüche, wobei die Generatoreinheit (1) einen Speicher (13) umfasst, mit welchem die vom Netzteil (10) bereitgestellte elektrische Energie gespeichert werden kann.

5. Energieübertragungssystem gemäss einem der vorangehenden Ansprüche, wobei der Druckstosserzeuger (12) einen Lautsprecher oder ein Piezoelement oder einen motorisierten Kolben umfasst, mit welchen aus elektrischer Energie Druckstösse erzeugbar sind, und wobei der Druckstosswandler (22) ein Mikrophon oder ein Piezoelement oder ein Sandwich aus Metall- und Polymerschichten umfasst.

6. Energieübertragungssystem gemäss einem der Ansprüche 1 bis 4, wobei der Druckstosserzeuger (12) einen Druckluftanschluss und mindestens ein Ventil umfasst, mit welchen aus Druckluft Druckstösse erzeugbar sind.

7. Energieübertragungssystem gemäss einem der vorangehenden Ansprüche, wobei der Druckstosserzeuger (12) und der Druckstosswandler (22) Druckstösse mit Amplituden im Bereich von 0.1 bis 1.0 Bar und Frequenzen im Bereich von 0.5 bis 5.0 Hertz erzeugen, bzw. umwandeln können.

8. Energieübertragungssystem gemäss einem der vorangehenden Ansprüche, wobei die Verbrauchereinheit (2) eine Steuerung (21) umfasst, welche mit der zweiten Übermittlungseinheit (24) eine entsprechende Information aussenden kann, wenn die im Speicher (23) gespeicherte elektrische Energie einen vorbestimmten Wert unterschreitet, und wobei die Generatoreinheit (1) eine Steuerung (11) umfasst, welche aufgrund einer von der ersten Übermittlungseinheit (14) empfangenen Information eine Aktivierung des Druckstosserzeugers (12) bewirken kann.

9. Installation umfassend mindestens eine Wasserleitung (3) und ein Energieübertragungssystem gemäss einem der vorangehenden Ansprüche.

10. Installation gemäss Anspruch 9, wobei die Generatoreinheit (1) derart ausgestaltet und an der Wasserleitung (3) angeordnet ist, dass der Druckstosserzeuger (12) Druckstösse direkt auf die Wasserleitung (3) übertragen kann oder direkt auf die sich in der Wasserleitung (3) befindliche Wasser übertragen kann oder auf ein sich zwischen dem Druckstosserzeuger (12) und dem Wasser befindliches weiteres Fluid (120;220) übertragen kann.

11. Installation gemäss Anspruch 9 oder 10, wobei die Verbrauchereinheit (2) derart ausgestaltet und an der Wasserleitung (3) angeordnet ist, dass der Druckstosswandler (22) Druckstösse direkt aus der Wasserleitung (3) umwandeln kann oder direkt aus dem sich in der Wasserleitung (3) befindlichen Wasser umwandeln kann oder aus dem sich zwischen dem Druckstosserzeuger (12) und dem Wasser befindlichen weiteren Fluid (120;220) umwandeln kann.

## Claims

1. Energy transmission system for a water pipe (3) of a sanitary installation, comprising a generator unit (1) with a power supply unit (10), which generator unit can be arranged at a first location of the water pipe (3), and at least one consumer unit (2) with at least one consumer (20; 200), which consumer unit can be arranged at a second location of the water pipe (3) spaced apart from the first location, wherein
the generator unit (1) comprises a pressure surge generator (12) connected to the power supply unit (10), with which pressure surge generator pressure surges can be generated which pressure surges can be introduced into the water present in the water pipe (3), and wherein
the consumer unit (2) comprises a pressure surge converter (22) connected to the at least one consumer (20; 200), by means of which pressure surge converter the pressure surges introduced into the water can be converted into electrical energy which can be supplied to the at least one consumer (20; 200), and wherein
the consumer unit (2) comprises a storage (23) with which the electrical energy provided by the pressure surge converter (22) can be stored.

2. Energy transmission system according to claim 1, wherein the at least one consumer comprises at least one sensor (20) and/or at least one actuator (200).

3. Energy transmission system according to claim 1 or 2, wherein the generator unit (1) comprises a first transmission unit (14) which is connected to the power supply unit (10), and wherein the consumer unit (2) comprises a second transmission unit (24) which is connected to the pressure surge converter (22), wherein the first transmission unit (14) and the second transmission unit (24) or several second transmission units (24) can exchange information with each other wirelessly.

4. Energy transmission system according to any one of the preceding claims,
wherein the generator unit (1) comprises a storage (13) with which the electrical energy provided by the power supply unit (10) can be stored.

5. Energy transmission system according to any one of the preceding claims,
wherein the pressure surge generator (12) comprises a loudspeaker or a piezoelectric element or a motorised piston, with which pressure surges can be generated from electrical energy, and wherein the pressure surge converter (22) comprises a microphone or a piezoelectric element or a sandwich of metal and polymer layers.

6. Energy transmission system according to any one of claims 1 to 4, wherein the pressure surge generator (12) comprises a compressed air connection and at least one valve, with which pressure surges can be generated from compressed air.

7. Energy transfer system according to any one of the preceding claims, wherein the pressure surge generator (12) and the pressure surge converter (22) can generate or convert pressure surges with amplitudes in the range from 0.1 to 1.0 bar and frequencies in the range from 0.5 to 5.0 Hertz.

8. Energy transmission system according to any one of the preceding claims,
wherein the consumer unit (2) comprises a controller (21) which can send corresponding information with the second transmission unit (24) when the electrical energy stored in the storage (23) falls below a predetermined value, and wherein the generator unit (1) comprises a controller (11) which can cause activation of the pressure surge generator (12) on the basis of information received from the first transmission unit (14).

9. Installation comprising at least one water pipe (3) and an energy transmission system according to one of the preceding claims.

10. Installation according to claim 9, wherein the generator unit (1) is configured and arranged on the water pipe (3) in such a way that the pressure surge generator (12) can transmit pressure surges directly to the water pipe (3) or can transmit them directly to the water located in the water pipe (3) or can transmit them to a further fluid (120; 220) located between the pressure surge generator (12) and the water.

11. Installation according to claim 9 or 10, wherein the consumer unit (2) is configured and arranged on the water pipe (3) in such a way that the pressure surge converter (22) can convert pressure surges directly from the water pipe (3) or can convert them directly from the water in the water pipe (3) or can convert them from the further fluid (120; 220) located between the pressure surge generator (12) and the water.

## Revendications

1. Système de transmission d'énergie pour une conduite d'eau (3) d'une installation sanitaire, comprenant une unité génératrice (1) avec une alimentation électrique (10), qui peut être disposée à un premier endroit de la conduite d'eau (3), et au moins une unité consommatrice (2) avec au moins un consommateur (20 ; 200), qui peut être disposée à un deuxième endroit de la conduite d'eau (3), espacé du premier endroit, dans lequel
l'unité génératrice (1) comprend un générateur d'impulsion de pression (12) relié à l'alimentation électrique (10), avec lequel des impulsions de pression peuvent être générées, lesquelles peuvent être induites dans l'eau se trouvant dans la conduite d'eau (3), et dans lequel
l'unité de consommation (2) comprend un convertisseur d'impulsion de pression (22) relié à l'au moins un consommateur (20 ; 200), avec lequel les impulsions de pression induites dans l'eau peuvent être converties en énergie électrique qui peut être amenée à l'au moins un consommateur (20 ; 200), et dans lequel l'unité de consommation (2) comprend un accumulateur (23) permettant de stocker l'énergie électrique fournie par le convertisseur d'impulsion de pression (22).

2. Système de transmission d'énergie selon la revendication 1, dans lequel l'au moins un consommateur comprend au moins un capteur (20) et/ou au moins un actionneur (200).

3. Système de transmission d'énergie selon la revendication 1 ou 2, dans lequel l'unité génératrice (1) comprend une première unité de transmission (14) qui est reliée à l'alimentation électrique (10), et dans lequel l'unité de consommation (2) comprend une deuxième unité de transmission (24) qui est reliée au convertisseur d'impulsion de pression (22), la première unité de transmission (14) et la deuxième unité de transmission (24) ou plusieurs deuxièmes unités de transmission (24) pouvant échanger des informations entre elles sans fil.

4. Système de transmission d'énergie selon l'une des revendications précédentes, dans lequel l'unité génératrice (1) comprend un accumulateur (13) permettant de stocker l'énergie électrique fournie par l'alimentation électrique (10).

5. Système de transmission d'énergie selon l'une des revendications précédentes, dans lequel le générateur d'impulsions de pression (12) comprend un haut-parleur ou un élément piézoélectrique ou un piston motorisé permettant de générer des impulsions de pression à partir d'énergie électrique, et dans lequel le convertisseur d'impulsion de pression (22) comprend un microphone ou un élément piézoélectrique ou un sandwich de couches métalliques et polymères.

6. Système de transmission d'énergie selon l'une quelconque des revendications 1 à 4, dans lequel le générateur d'impulsions de pression (12) comprend un raccord d'air comprimé et au moins une soupape permettant de générer des impulsions de pression à partir d'air comprimé.

7. Système de transmission d'énergie selon l'une quelconque des revendications précédentes, dans lequel le générateur d'impulsions de pression (12) et le convertisseur d'impulsions de pression (22) peuvent générer, respectivement convertir, des impulsions de pression avec des amplitudes dans la plage de 0,1 à 1,0 bar et des fréquences dans la plage de 0,5 à 5,0 hertz.

8. Système de transmission d'énergie selon l'une des revendications précédentes, dans lequel l'unité de consommation (2) comprend une commande (21) qui peut émettre une information correspondante avec la deuxième unité de transmission (24) lorsque l'énergie électrique stockée dans l'accumulateur (23) est inférieure à une valeur prédéterminée, et dans lequel l'unité génératrice (1) comprend une commande (11) qui peut provoquer une activation du générateur d'impulsions de pression (12) sur la base d'une information reçue de la première unité de transmission (14).

9. Installation comprenant au moins une conduite d'eau (3) et un système de transmission d'énergie selon l'une des revendications précédentes.

10. Installation selon la revendication 9, dans laquelle l'unité génératrice (1) est conçue et disposée au niveau de la conduite d'eau (3) de telle sorte que le générateur d'impulsions de pression (12) peut transmettre des impulsions de pression directement à la conduite d'eau (3) ou peut transmettre des impulsions de pression directement à l'eau se trouvant dans la conduite d'eau (3) ou peut transmettre des impulsions de pression à un autre fluide (120 ; 220) se trouvant entre le générateur d'impulsions de pression (12) et l'eau.

11. Installation selon la revendication 9 ou 10, dans laquelle l'unité de consommation (2) est conçue et disposée au niveau de la conduite d'eau (3) de telle sorte que le convertisseur d'impulsions de pression (22) peut convertir des impulsions de pression directement à partir de la conduite d'eau (3) ou peut convertir directement à partir de l'eau se trouvant dans la conduite d'eau (3) ou peut convertir à partir du fluide supplémentaire (120 ; 220) se trouvant entre le générateur d'impulsions de pression (12) et l'eau.
